# EUROPÄISCHE PATENTSCHRIFT

(11) **EP 2 489 695 B1**
(45) Veröffentlichungstag und Bekanntmachung des Hinweises auf die Patenterteilung: **16.08.2017**
(21) Anmeldenummer: 12150933.5
(22) Anmeldetag: 12.01.2012
(51) Int. Cl.: C08J 11/06, B29K 105/26, C08L 67/02, C08J 3/00, B29B 17/00, B29K 67/00

(54) **Verfahren und Vorrichtung zum Bereitstellen eines Rohmaterials zum Herstellen von Behältern aus PET**
Device and method for preparing a raw material for producing PET containers
Procédé et dispositif de préparation d'un matériau brut destiné à la fabrication de récipients en PET

(30) Priorität: 15.02.2011 DE 102011004151
(43) Veröffentlichungstag der Anmeldung: 22.08.2012
(73) Patentinhaber: Krones AG, 93073 Neutraubling (DE)
(72) Erfinder: Führer, Kaj, 93105 Tegernheim (DE)
(74) Vertreter: Grünecker Patent- und Rechtsanwälte PartG mbB

(56) Entgegenhaltungen:
- WO-A1-2004/106025
- WO-A1-2006/099976
- US-A1- 2010 152 311

## Beschreibung

Die Erfindung bezieht sich auf ein Verfahren und eine Vorrichtung zum Bereitstellen eines Rohmaterials zum Herstellen von Behältern aus PET, wobei das Rohmaterial aus recyceltem PET und PET-Neuware gemischt wird.

Es ist bekannt, dass zum Herstellen von Behältern aus PET, insbesondere von Getränkeflaschen, ein Teil des dafür verwendeten Rohmaterials aus recyceltem PET (r-PET) besteht. Bislang wurde das r-PET zunächst bereitgestellt und erst dann mit dem v-PET gemischt. Dies erfolgte bevorzugt unmittelbar vor der Verwendung des Rohmaterials, beispielsweise unmittelbar vor einer Spritzgießmaschine zum Herstellen von Preforms. PET-Neuware muss jedoch vor der Verwendung getrocknet werden, da es unvermeidlich Feuchtigkeit aufnimmt. Hierfür ist ein Trocknungsofen notwendig.

Wie beispielsweise der WO 2006/099976 zu entnehmen ist, wird andererseits das r-PET beim Austritt aus dem Recyclingprozess gekühlt, bevor es in den Preform-Herstellungsprozess eingebracht wird. Beide Materialien, das gekühlte r-PET und das getrocknete v-PET werden vor der Plastifizierung des PET-Materials in ein für den Preform-Herstellungsprozess optimales Mischungsverhältnis (z.B. 50 : 50) gebracht, was eine Schleuse oder eine Mischkammer erfordert.

WO 2004/106025 A1 offenbart ein Verfahren zur Herstellung von PET-Recyclat, das nur Spuren von Kontamination im ppm-Bereich aufweist und für den späteren Verarbeitungsprozess im Lebensmittelbereich, und demzufolge auch für die Herstellung von Behältern geeignet ist. Das Verfahren zum Recyclen von PET enthält einen Trocknungsschritt, einen Extrusionsschritt unter Vakuum und einen Kristallisationsschritt. Zusätzlich zu dem Recyclingmaterial wird vor oder während des Extrusionsschrittes dem erwärmten r-PET amorphes PET-Neumaterial zugemischt.

US 2010/152311 A1 offenbart ein Verfahren zur herstellung einer Zusammensetzung aus recyceltem PET und PET-Neumaterial, in dem PET-Recyclat zur Homogenisierung nach dem Mischungsschritt PET-Neuware zugemischt wird und anschließend extrudiert wird. Der Erfindung liegt die Aufgabe zugrunde, ein Verfahren und eine Vorrichtung zum Bereitstellen eines Rohmaterials zum Herstellen von Behältern aus PET bereitzustellen, die energiesparend und wenig aufwändig ist.

Die Aufgabe wird durch das Verfahren nach Anspruch 1 und die Vorrichtung nach Anspruch 8 gelöst.

Durch die erfindungsgemäße Ausgestaltung kann das Verfahren und die Vorrichtung in mehrfacher Hinsicht optimiert werden. Zum einen kann der Trocknungsofen entfallen, wobei auch die Energie für seinen Betrieb eingespart werden kann. Zum anderen kann die Mischung direkt im Herstellungsprozess des r-PET erfolgen, so dass die Schleuse/Mischkammer entbehrlich ist und eine Kühlung des r-PET zum Zwecke einer optimalen Mischung nicht mehr notwendig ist. Dadurch ist es möglich, eine nachfolgende Herstellungsmaschine für Behälter oder ihrer Vorprodukte direkt aus der Recyclinganlage für PET zu speisen.

Vorteilhafte Weiterbildungen der Erfindung sind den Unteransprüchen zu entnehmen. Gemäß der vorliegenden Erfindung wird v-PET dem r-PET nach Verlassen eines SSP-Reaktors zugefügt und das r-PET durch das v-PET mit niedriger Temperatur abgekühlt. Gleichzeltig wird das v-PET getrocknet.

Ein Ausführungsbeispiel der Erfindung wird nachfolgend anhand der einzigen Zeichnung näher erläutert.

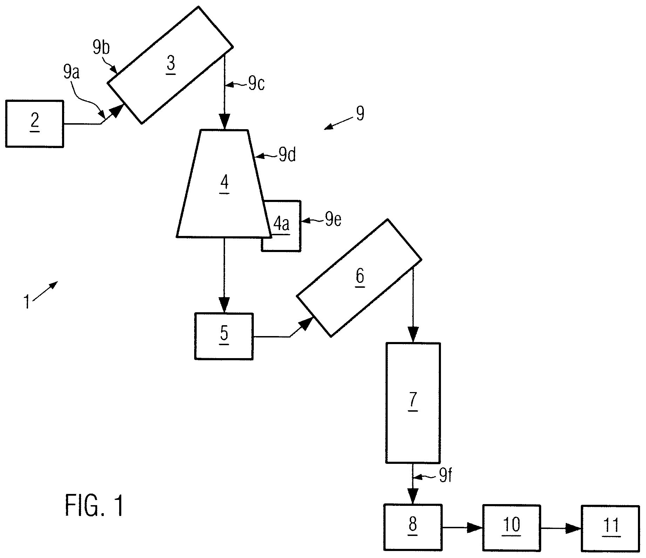

Fig. 1 zeigt eine Recyclinganlage 1 zum Herstellen von r-PET für Rohmaterial zum Herstellen von Behältern aus PET. Die Recyclinganlage 1 ist von derjenigen Art, wie sie in der WO 2006/099976 beschrieben ist, wurde jedoch gemäß der vorliegenden Erfindung modifiziert. Nachfolgend werden demnach nur die für die vorliegende Erfindung wichtigen Bestandteile der Recyclinganlage 1 beschrieben, wobei für weitere Details auf die Offenbarung der WO 2006/099976 verwiesen wird.

Die Anlage 1 enthält eine Dosiereinrichtung 2, in die Partikel, nachfolgend Flakes, eingegeben werden, die in einer Mahlvorrichtung aus Gebrauchtgegenstände aus PET erzeugt wurden. Die Flakes wurden vor dem Eingeben in die Dosiereinrichtung bereits gewaschen. Die Dosiereinrichtung 2 fördert die Flakes zu einer Dekontaminationsschnecke 3, die sie auflockert und erwärmt, bevorzugt auf etwa 150°C. Dabei kristallisieren die Flakes so weit, dass sie sich problemlos fördern lassen und nicht kleben.

Nach dem Erwärmen der Flakes auf Prozesstemperatur werden diese in einen Dekontaminationsreaktor 4 gegeben, in dem durch Gaszufuhr die aus den Flakes ausgetriebenen Kontaminanten abgeführt und die Flakes auf der vorher aufgewärmten Temperatur von 150°C stabilisiert werden.

Aus dem Dekontaminationsreaktor 4 gelangen die Flakes über eine weitere Dosiereinrichtung 5 in eine SSP-Heizschnecke 6 und aus dieser in einen SSP-Reaktor 7. Im SSP-Prozess werden Molekülkettenlängen den Erfordernissen angepasst, was bei Temperaturen zwischen 170°C und 210°C geschieht. Außerdem kann Vakuum oder eine Inertgasatmosphäre angelegt werden. Aus dem SSP-Reaktor gelangen die Flakes wiederum in eine Dosiereinrichtung 8.

Erfindungsgemäß enthält die Anlage 1 eine Dosiereinrichtung 9f nach einem SSP-Reaktor (7) und vor der Dosiereinrichtung (8) zum Zudosieren von v-PET direkt in die Recyclinganlage 1. Das v-PET wird bevorzugt in gut dosierbarer Form, also beispielsweise in Form von Pellets oder Granulat oder dgl., zudosiert. Gemäß der vorliegenden Erfindung befindet sich eine Dosierstelle 9f nach dem SSP-Reaktor 7, den die r-PET-Flakes mit hoher Temperatur verlassen, so dass ein Wärmeaustausch zwischen beiden PET-Arten stattfindet und der im Stand der Technik vorhandene Kühlreaktor überflüssig wird.

Nach dem Verlassen der Dosiereinrichtung 8 kann die Mischung aus r-PET und v-PET als Rohmaterial direkt in eine Plastifizierungseinrichtung 10 eingegeben werden, die das Rohmaterial für eine Verarbeitung in einer nachfolgenden Herstellungsmaschine 11, beispielsweise einer Spritzgussmaschine zum Herstellen von Behälter-Preforms vorbereitet.

## Patentansprüche

1. Verfahren zum Bereitstellen eines Rohmaterials zum Herstellen von Behältern aus PET, wobei das Rohmaterial aus recyceltem PET (r-PET) und PET-Neuware (v-PET) gemischt wird und dass v-PET dem erwärmten r-PET zugemischt wird, wobei v-PET dem r-PET nach Verlassen eines SSP-Reaktors zugefügt wird.

2. Verfahren nach Anspruch 1, **dadurch gekennzeichnet, dass** das kalte v-PET dem erwärmten r-PET in einer Kühlstrecke zugegeben wird.

3. Vorrichtung zum Bereitstellen eines Rohmaterials zum Herstellen von Behältern aus PET, wobei das Rohmaterial aus recyceltem PET (r-PET) und PET-Neuware (v-PET) gemischt wird, wobei die Vorrichtung eine Recyclinganlage (1) enthält, die wenigstens mit einer Dosiereinrichtung (9f) zum Eindosieren von v-PET zu dem erwärmten r-PET, wobei die Dosiereinrichtung (9f) nach einem SSP-Reaktor (7) vorgesehen ist; wobei die Vorrichtung, in Transportrichtung des r-PET, folgendes umfasst:
eine erste Dosiereinrichtung (2), die die r-PET eingegeben werden kann;
eine Dekontaminationsschnecke zu auflockern und erwärmen des r-PET;
einen Dekontaminationsreaktor (4) zum Abführen der aus dem r-PET ausgetriebenen Kontaminanten;
eine zweite Dosiereinrichtung (5), die das r-PET einer SSP-Heizschnecke (6) zuführt; den SSP-Reaktor (7), dem das r-PET über die SSP-Heizschnecke (6) zugeführt wird; die Dosiereinrichtung (9f); eine dritte Dosiereinrichtung (8).

## Claims

1. Method for providing a raw material for production of PET containers, wherein the raw material is mixed from recycled PET (r-PET) and virgin PET (v-PET), and the v-PET is added to the heated r-PET, wherein the v-PET is added to the r-PET after leaving an SSP reactor.

2. Method according to claim 1, **characterized in that** the cold v-PET is added to the heated r-PET in a cooling section.

3. Device for providing a raw material for the production of PET containers, wherein the raw material is mixed from recycled PET (r-PET) and virgin PET (v-PET), wherein the device comprises a recycling plant (1) provided with at least one dosing device (9f) for introducing v-PET to the heated r-PET, wherein the dosing device (9f) is provided after a SSP-reactor (7);
wherein the device comprises the following in transport direction of the r-PET:
a first dosing device (2), in which the r-PET can be introduced;
a decontamination screw for loosening and heating the r-PET;
a decontamination reactor (4) for discharging the decontaminants expelled from the r-PET;
a second dosing device (5) that transports the r-PET to a SSP-heating screw (6);
the SSP-reactor (7) to which the r-PET is supplied via the SSP-heating screw (6);
the dosing device (9f);
a third dosing device (8).

## Revendications

1. Procédé de préparation d'un matériau brut destiné à la fabrication de récipients en PET, dans lequel on mélange le matériau brut constitué de PET recyclé (r-PET) et de PET vierge (v-PET) et on mêle du v-PET au r-PET chauffé, dans lequel on ajoute du v-PET au r-PET après avoir quitté un réacteur SSP.

2. Procédé selon la revendication 1, **caractérisé en ce que** l'on ajoute le v-PET froid au r-PET chauffé dans une section de refroidissement.

3. Dispositif de préparation d'un matériau brut destiné à la fabrication de récipients en PET, dans lequel on mélange le matériau brut constitué de PET recyclé (r-PET) et de PET vierge (v-PET), dans lequel le dispositif comprend une installation de recyclage (1), qui comporte au moins un dispositif de dosage (9f) pour ajouter par doses du v-PET au r-PET chauffé, dans lequel le dispositif de dosage (9f) est prévu après un réacteur SSP (7);
dans lequel le dispositif comprend, dans la direction de transport du r-PET, les composants suivants:
un premier dispositif de dosage (2), par lequel du r-PET peut être ajouté;
une vis de décontamination destinée à disloquer et à chauffer le r-PET;
un réacteur de décontamination (4) destiné à évacuer les contaminants extraits du r-PET;
un deuxième dispositif de dosage (5), qui amène le r-PET à une vis de chauffage SSP (6);
le réacteur SSP (7), auquel le r-PET est amené par la vis de chauffage SSP (6);
le dispositif de dosage (9f);
un troisième dispositif de dosage (8).
